**Europäisches Patentamt**

**European Patent Office**

**Office européen des brevets**

(11) Publication number: **0 090 507**
A1

# EUROPEAN PATENT APPLICATION

(21) Application number: **83301131.5**

(22) Date of filing: **03.03.83**

(51) Int. Cl.³: **B 65 D 81/26,** B 32 B 27/08

(30) Priority: **22.03.82 US 360270**

(43) Date of publication of application: **05.10.83**
**Bulletin 83/40**

(84) Designated Contracting States: **BE DE FR GB IT NL**

(71) Applicant: **MOBIL OIL CORPORATION, 150 East 42nd Street, New York New York 10017 (US)**

(72) Inventor: **Wu, Allison Meta, 11 Tall Acres Drive, Pittsford New York 14534 (US)**

(74) Representative: **West, Alan Harry et al, Mobil Court 3 Clements Inn, London WC2A 2EB (GB)**

(54) Condensate absorbant fast food container and method of packaging.

(57) A thermoformed container having a hot food receiving region and a cover region. The inner surface of said container comprises an open cell foamed polymer structure and the outer surface is a liquid barrier polymer. A method of packaging hot food includes confining said food within the covered container.

F-1564                           -1-

<u>CONDENSATE ABSORBANT FAST FOOD CONTAINER</u>
<u>AND METHOD OF PACKAGING</u>

The present invention relates to a condensate absorbant fast food container.

The packaging of sandwiches of the above identified type in polystyrene foam "clamshell" containers or containers having detached covers has become a familiar occurrence. This type of package has an esthetically appealing design and useful features such as strength, cleanliness, low cost, and logo printability. One shortcoming of this type of package is the fact that it permits hot food vapors to condense on the inside surfaces thereof and, thereafter transmit the condensate to the surface of the food packaged therein.

Attempts to solve this problem by venting the foamed polymer container have not been successful since condensation still forms while the vents only serve to promote heat loss. The use of an absorbant material such as paper board has been no more successful as the food is still exposed to the surface of the wet absorbant. In addition, the use of a material such as paper board precludes the thermoforming of containers from flat thermoplastic sheet blank stock. Moreover, the use of such material is more costly since the absorbant material must be adhesively bonded to some exterior sheet material.

It is therefore an object of the present invention to provide an inexpensive fast food container having all of the beneficial aspects of a thermally formed foam container for hot foods which will not transmit food vapor condensate to food contained therein.

The present invention is directed to a thermally formed fast food container comprising a food receiving region and a closable cover region. The wall of the container comprises a laminar composite of an open cell foamed polymer layer and a liquid barrier polymer layer. This composite is so arranged that the inner wall region is of substantially open cell foamed polymer so as to present a plurality of condensation sites and micro-reservoirs for the trapping of food vapor condensate. The outer wall region is a polymer which provides a layer relatively impervious to condensate trapped in the micro-reservoirs. The present invention also provides a method of packaging hot food.

Figure 1 is a perspective view of the food container of the present invention in a partly opened position; and

Figure 2 is a fragmentary cross-sectional view of a representation of the composite material of which the container of the present invention is made.

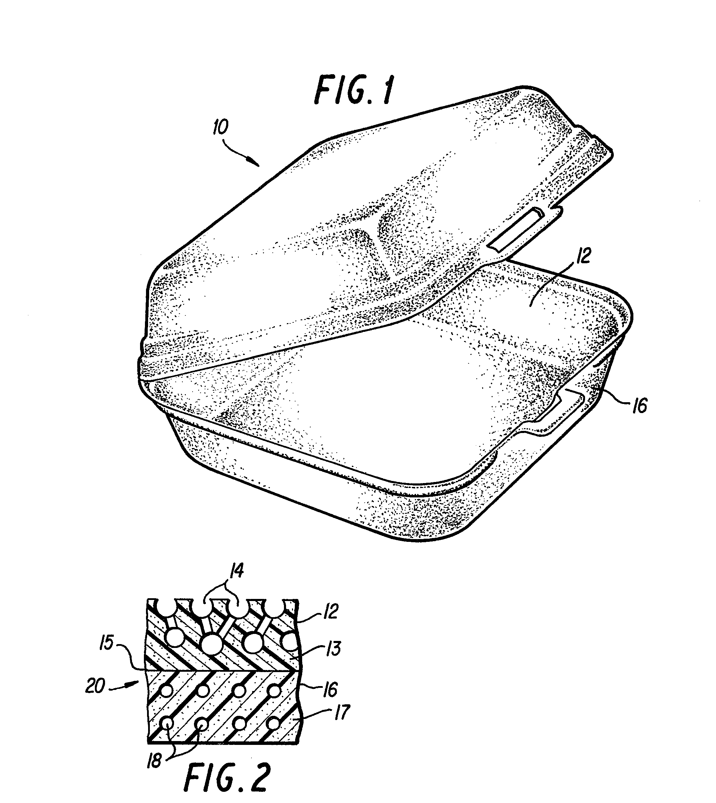

The container 10 represented in Figure 1 is the "clamshell" container. The inner wall region 12 of the container is composed of open cell foam polymer and the outer wall region 16 of the container is composed of closed cell foam polymer. Figure 2 shows a cross-sectional view of the wall of the container 10, which was produced by thermoforming a sheet of the laminar composite 20. This figure shows one laminar region 12 of a foamed polymer material 13 having a plurality of open cells 14 distributed throughout. Region 12 is coextruded or laminated or bonded in some fashion at 15 to a second laminar closed cell polymer layer 16 composed of a polymer 17 containing a plurality of closed cells 18 distributed throughout. While the outer layer is shown as a foamed polymer, it is to be understood that any polymeric, non-foamed polymer skin material can be employed in place thereof.

The present invention may be employed using any thermoplastic polymer material which can be formed into an open cell foamed state. Examples of such materials include foamed polystyrene, polyparamethylstyrene polyvinyl chloride, polyvinyl acetate, polyvinyl dichloride, cellulose acetate, cellulose acetate butyrate, polyvinylidene chloride, methyl methacrylate polymers, acrylonitrile-butadiene styrene copolymers and polyolefins.

The liquid barrier polymer and open cell foamed polymer can be of the same polymer material or of different polymer materials. Thus, for example, the inside surface region of the container can be of open cell foamed polystyrene while the external wall region of the container can be closed cell foamed polyvinyl chloride or a skin layer of unfoamed polyvinyl chloride.  It is particularly preferred that polystyrene or polyparamethylstyrene be employed as both the inside open cell foamed polymer and the outside barrier polymer.

While the inner layer of the container of the present invention can be made of any polymer which can be open cell foam extruded, for purposes of illustration the container will be described using polystyrene both as the outer polymer in the closed cell state and as the opened cell foamed polymer.  Techniques for the extrusion of closed cell polystyrene foam are well known in the art and a particularly desirable method is disclosed in U.S. Patent No. 3,482,006.  In such a process, polystyrene pellets are first coated with or admixed with a nucleating agent.  Typical of such nucleating agents is a mixture of sodium bicarbonate and citric acid.  The nucleating agent, admixed with the polystyrene, serves to control the size of the cells contained in the extruded foam product.  Following admixing of the nucleating agent with the polystyrene resin, the mixture is fed to a standard rotating screw-type extruder, wherein it is thoroughly mixed and melted as it is advanced toward the extrusion end of the extruder system.  A blowing agent, such as pentane or isopentane, is injected into the extruder downstream of the feed hopper.  The pentane blowing agent is thoroughly admixed with the melted polystyrene and nucleating agent and this mixture is eventually extruded from the extrusion system through a die orifice, either in the form of a flat foam sheet or a tubular foam structure.  This structure is subsequently cooled and, if in a tubular form, is slit to form a flat sheet.  Thereafter, it is wound into rolls for aging for a period normally ranging from one to three days.

It is of prime importance that the size of the individual cells of the foam structure be regulated within close tolerance.  Such control guarantees the ultimate formation of thermoformed structures which possess considerable strength in view of the overall weight of the material employed.

The closed cell polystyrene foam of the present invention preferably has an average cell size of between .1 and .5 mm (4 to 20 mils).  It is preferred that the closed cell polystyrene have an open cell percentage which is less than 30% and does not transmit liquid or moisture.  A typical density range for this material is from 0.075 to 0.100 g/cc.  The sheet gauge can be from .25 to 2.5 mm (10 to 100 mils).

In forming the open cell foam, the process is generally the same as that in forming closed cell polystyrene except that an excess of nucleating agent, such as sodium bicarbonate and citric acid, in a weight ratio of from 0.8 - 1.2 to 1.2 - 0.8, with no blowing agent, is employed.  The polystyrene is brought to a fairly high melt temperature, such as 196°-204°C (385°F-400°F), just prior to extrusion.  Since no blowing agent is used, only a single mixing chamber or screw is needed in advance of the point of extrusion.  For example, a single 8.9 cm (3 1/2 inch) extruder with a 20:1 single flight single state feed screw can be employed.  Employing such a system, an open cell foamed polystyrene having an average open cell percentage of from 50 to 90 percent can be obtained.  The open cells can have an average diameter of from 25.4 $\mu$m to .30 mm (1 to 12 mils).  A typical density range for this material is from 0.150 to 0.450 g/cc.  The sheet gauge can be from .25 to 1.25 mm (10 to 50 mils).

The stock sheet composite, from which the container of the present invention is thermoformed, can be prepared in any suitable manner.  For example, closed cell polystyrene and open cell polystyrene may be coextruded and self-laminated together prior to being wound into rolls for aging.  Alternatively these layers can be separately formed and bonded together with the use of a suitable adhesive.  In addition they may be laminated during thermoforming.

A typical sandwich container can have an open cell foam layer of a density of 0.312 g/cc and a gauge of .64 mm (24 mils) and a closed cell foam layer of a density of 0.087 g/cc and 1.7 mm (65 mils) gauge.  These two layers can be thermoformed together during the formation of the container.

F-1564                          -5-

The open cell percentage can be obtained by use of a Beckman model 930 Air-Pyknometer. This device measures the true volume of a sample of the polystyrene foam. Percent open cells are measured by subtracting the true volume from the geometric volume expressed as a percent.

Using conventional thermoforming techniques, sandwich structures of the type illustrated in Figure 1 can be formed of the open and closed cell polystyrene laminate of the present invention. The overall polystyrene foam stock material can be approximately the same thickness as in prior art containers, such as those ranging from .51 to 3.0 mm (20 to 120 mils). In such an arrangement, the closed cell part of the sheet stock may amount to from 20 to 80% of the overall thickness of the sheet stock and the open cell layer of the sheet stock may amount to from 80 to 20% of the overall thickness of the sheet stock.

When the outer liquid barrier layer is an unfoamed polymer skin, it can be adhered to the open cell foam in any convenient manner. Its thickness can be such as to also impart any needed strength to the container. It is to be understood that the cover region of the container may be an integral hinged extension of the food receiving region or it may be a separate cover designed to securely close the food receiving region.

It is to be understood that the outer liquid barrier layer of the container may be composed of more than one layer. An example of this is a closed cell layer having a thin skin film of the same or different polymer thereon. The order of the outer layers can also be reversed so that the thin polymer skin film is between an open cell layer and a closed cell layer.

It is also contemplated that the open cell foam polymer have an additive material therein or thereon to enhance the wetability of the cell structure. Since both aqueous and non-aqueous liquids are present in food stuffs, the additive or additives should enhance the wetability of the open cell structure to both types of liquids.  In
this regard, there can be added surfactants and emulsifiers such as
glycols and polyglycols, or the polymer can be chemically treated such
as by sulfonation.

7

CLAIMS:

1. A thermoformed fast food container having a hot food receiving region and a cover region comprising a laminar composite of an open cell foamed polymer layer and a liquid barrier polymer layer, such composite being so arranged that the inner wall region of the container is at least substantially open cell foamed polymer so as to present a plurality of condensation sites and micro-reservoirs for the trapping of food vapor condensate and the outer wall region is a polymer providing a barrier for condensate trapped in the micro-reservoirs.

2. A container according to claim 1, wherein the liquid barrier layer is a closed cell polymer foam.

3. A container according to claim 1, wherein the liquid barrier layer is a non-foamed, polymer skin layer,

4. A container according to any one of claims 1 to 3, wherein the open cell foamed layer and the liquid barrier layer are composed of the same polymer.

5. A container according to any one of claims 1 to 3, wherein the open cell foamed layer and the liquid barrier layer are composed of different polymers.

6. A container according to claim 4 or claim 5, wherein the liquid barrier layer is composed of polystyrene.

7. A container according to claim 4 or claim 5, wherein the liquid barrier layer is composed of poly-(p-methyl)styrene.

8. A container according to claim 5, wherein the open cell foamed layer is composed of polystyrene.

9. A container according to any one of claims 1 to 8, which has been thermoformed from open cell foam polymer stock having an average sepcific gravity from 0.075 to 0.100 g/cc.

10. A container according to any one of claims 1 to 9, wherein the open cell foamed polymer layer has therein or thereon an agent for enhancing the wetability of the cell structure.

11. A method of packaging a hot food, the food comprising a first portion emitting condensable vapors and a second portion capable of absorbing the condensate of the vapors, comprising placing the hot food

8

in a container according to any one of claims 1 to 10 and closing the cover region of the container so that the open cell foamed polymer presents a plurality of condensation sites and micro-reservoirs and thereby traps resulting condensate and substantially lessens the condensate available for absorption by the second food portion, the outer wall region of the container providing a barrier for the condensate trapped in the micro-reservoirs.

*FIG. 1*

10

12

16

*FIG. 2*

14

12

15

13

20

16

17

18

0090507

European Patent
Office

EUROPEAN SEARCH REPORT

Application number

EP 83 30 1131

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 237 171 (F.C. LAAGE) <br> * Column 1, lines 60-68 * | 1,2,11 | B 65 D 81/26 <br> B 32 B 27/08 |
| Y | FR-A-2 248 989 (SEMPERIT AG) <br> * Page 1, lines 17-29; claim 5 * | 1 | |
| Y | FR-A-2 041 488 (WINSTEAD) <br><br> * Page 1, lines 33-40; page 2, lines 1-3; page 3, lines 31-32; claims 1,2,6,11; figure 4 * | 1-4,6, 8,9 | |
| A | DE-A-2 543 840 (SUN SHIPBUILDING & DRY DOCK CO.) | | |
| A | FR-A-1 433 389 (BAUDET) | | |

TECHNICAL FIELDS
SEARCHED (Int. Cl. 3)

B 32 B
B 65 D    1/34
B 65 D   81/26

The present search report has been drawn up for all claims

| Place of search <br> THE HAGUE | Date of completion of the search <br> 01-07-1983 | Examiner <br> VAN THIELEN J.B. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03 82